# EUROPÄISCHE PATENTSCHRIFT

(11) **EP 2 879 076 B1**
(45) Veröffentlichungstag und Bekanntmachung des Hinweises auf die Patenterteilung: **06.04.2016**
(21) Anmeldenummer: 13194651.9
(22) Anmeldetag: 27.11.2013
(51) Int. Cl.: G06K 7/10

(54) **Sensor zum Erfassen von Objekten**
Sensor for detecting objects
Capteur de détection d'objets

(43) Veröffentlichungstag der Anmeldung: 03.06.2015
(73) Patentinhaber: SICK AG, 79183 Waldkirch (DE)
(72) Erfinder: Fürstenberg, Kay, 21029 Hamburg (DE); Böhning, Markus, 20251 Hamburg (DE)
(74) Vertreter: Ludewigt, Christoph

(56) Entgegenhaltungen:
- EP-A1- 2 492 840
- JP-A- H06 237 343

## Beschreibung

Die Erfindung betrifft einen Sensor zum Erfassen von Objekten gemäß dem Oberbegriff des Anspruchs 1.

Ein herkömmlicher Sensor, wie z. B. ein 3D-Laserscanner, eine Mono-Kamera, eine Stereo-Kamera oder ein auf elektromagnetischer Welle basierender Sensor, weist ein Gehäuse auf, das ein Sichtfenster besitzt, so dass von einem Objekt ausgehende, insbesondere ausgestrahlte oder rückreflektierte, Information in Form von Licht oder anderen elektromagnetischen Wellen durch das Sichtfenster auf eine hinter dem Sichtfenster angeordnete Informationserfassungseinheit auftreffen und ausgewertet werden kann. Hierbei wird der Sensor an einer Anlage derart montiert, dass eine Kante des Gehäuses und somit auch eine Kante des Sichtfensters parallel zu der Anlage ausgerichtet ist.

Objekte, die in ein Sichtfeld des Sensors gelangen, werden durch den Sensor erfasst und mittels einer Auswerteelektronik erkannt.

Hierbei besteht ein Nachteil, dass das Objekt, z. B. ein Barcode, derart versetzt zum Sichtfenster in das Sichtfeld des Sensors eintreten kann, so dass die Informationserfassungseinheit das Objekt nur teilweise erfassen und somit nicht erkennen kann.

Ein wie oben beschriebener Sensor ist aus der EP 2 492 840 A1 bekannt. Insbesondere entspricht der Sensor einem Sensor gemäß dem Oberbegriff des Anspruchs 1 und ist zum Erkennen von strichkodierter Information vorgesehen.

Es ist eine Aufgabe der vorliegenden Erfindung, einen Sensor der eingangsgenannten Art derart zu verbessern, dass ein Objekt trotz versetzter Lage zu dem Sichtfenster bzw. der Informationserfassungseinheit des Sensors vollständig erfasst und ausgewertet werden kann.

Diese Aufgabe wird erfindungsgemäß durch einen Sensor mit den Merkmalen des Anspruchs 1 gelöst.

Der Sensor zum Erfassen eines Objektes besitzt ein Gehäuse, das ein Sichtfenster mit einer definierten Bezugskante zum Objekt in einer ersten Position und eine hinter dem Sichtfenster angeordnete Informationserfassungseinheit aufweist, wobei die Informationserfassungseinheit in eine zweite Position derart angeordnet oder bringbar ist, wobei in der zweiten Position eine Diagonale der Informationserfassungseinheit derart zum Objekt wie die definierte Bezugskante in der ersten Position positioniert ist, wobei eine elektronische Karte im Gehäuse vorgesehen ist, auf der die Informationserfassungseinheit in der ersten Position platziert ist, in der ersten Position eine definierte Erfassungsfläche mit einer Vielzahl von Signalerfassungspunkten auf der Informationserfassungseinheit vorgesehen ist, und in der ersten Position die Signalerfassungspunkte eine Vielzahl von parallel zu der Bezugskante des Sichtfensters angeordneten Signalerfassungszeilen und die nicht parallel zu der Bezugskante des Sichtfensters angeordnete Diagonale mit einer maximal möglichen Anzahl an Signalerfassungspunkten der Erfassungsfläche bilden, und wobei die Informationserfassungseinheit gegenüber dem Sichtfenster in die zweite Position derart gekippt ist, dass die Diagonale mit der maximal möglichen Anzahl an Signalerfassungspunkten der Erfassungsfläche parallel zu der Bezugskante des Sichtfensters angeordnet ist.

Hierdurch wird ein Erfassungswinkel des Sensors auf einfachste Art und Weise gegenüber dem Objekt vergrößert, so dass mehr vom Objekt erfasst werden kann.

Gemäß einem bevorzugten Ausführungsbeispiel weist die Informationserfassungseinheit einen CCD-, CMOS-, NMOS-, InGaAs-Chip oder andere elektromagnetische Wellen erfassbaren Chips auf. Hierbei haben die Chips unterschiedliche Erfassungsflächen mit unterschiedlicher Anzahl an Signalerfassungspunkten. Die Erfassungsfläche der Informationserfassungseinheit kann vorteilhafterweise eine quadratische Form, eine rechteckige Form insbesondere mit einem Format von vier zu drei (4:3) oder sechszehn zu neun (16:9) oder eine vieleckige oder elliptische Form aufweisen.

Vorteilhafterweise ist die Informationserfassungseinheit um 45° bei einem quadratischen Seitenverhältnis zu dem Sichtfenster kippbar. Bei einem anderen Seitenverhältnis wie z. B. 4:3 oder 16:9 beträgt eine optimale Kippung der Informationserfassungseinheit ungefähr 37° bzw. ungefähr 29°.

Gemäß einem weiteren Ausführungsbeispiel weist die elektronische Karte eine Auswerteeinheit auf und die Informationserfassungseinheit ist automatisch von der ersten in die zweite Position gekippt, wenn die Auswerteeinheit erkennt, dass das Objekt, insbesondere ein Barcode, durch die Erfassungsfläche in der ersten Position nur teilweise erfassbar und somit nicht lesbar ist.

Da der Sensor fest an der Anlage montiert ist, passt das Objekt, das versetzt zu dem Sensor liegt und in das Sichtfeld des Sensors eintritt, nur unvollständig in die definierte Erfassungsfläche des Sensors, so dass das Objekt nicht erfasst und gelesen werden kann. Durch das Kippen des Sensors bzw. der Auswerteeinheit und somit der Erfassungsfläche kann die Diagonale mit der maximal möglichen Anzahl an Signalerfassungspunkten zu dem Objekt derart positioniert werden, so dass das Objekt vollständig in die definierte Erfassungsfläche des Sensors passt. D. h. ein Erfassungsbereich, der parallel zu der Kante des Sensors ist, kann derart vergrößert werden, ohne zusätzliche Bauteile zu verwenden oder ohne eine ursprüngliche Auflösung des Sensors zu verändern.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung eines Sensors mit einem Objekt im Sichtfeld in einer ersten Position;
- Fig. 2: eine erfindungsgemäße Ausführungsform des Sensors in einer zweiten Position;
- Fig. 2A: eine Schnittansicht entlang der Linie A-A des Sensors;
- Fig. 2B: die Schnittansicht entlang der Linie A'-A' der erfindungsgemäßen Ausführungsform des Sensors;
- Fig. 3A: eine Schnittansicht einer weiteren erfindungsgemäßen Ausführungsform entlang der Linie A-A des Sensors in der ersten Position;
- Fig. 3B: die Schnittansicht entlang der Linie A-A der erfindungsgemäßen Ausführungsform des Sensors in der zweiten Position;
- Fig. 4A: eine Schnittansicht der weiteren erfindungsgemäßen Ausführungsform entlang der Linie B-B des Sensors in der ersten Position;
- Fig. 4B: die Schnittansicht entlang der Linie B-B der erfindungsgemäßen Ausführungsform des Sensors in der zweiten Position, und
- Fig. 5: eine schematische Darstellung der erfindungsgemäßen Ausführungsformen.

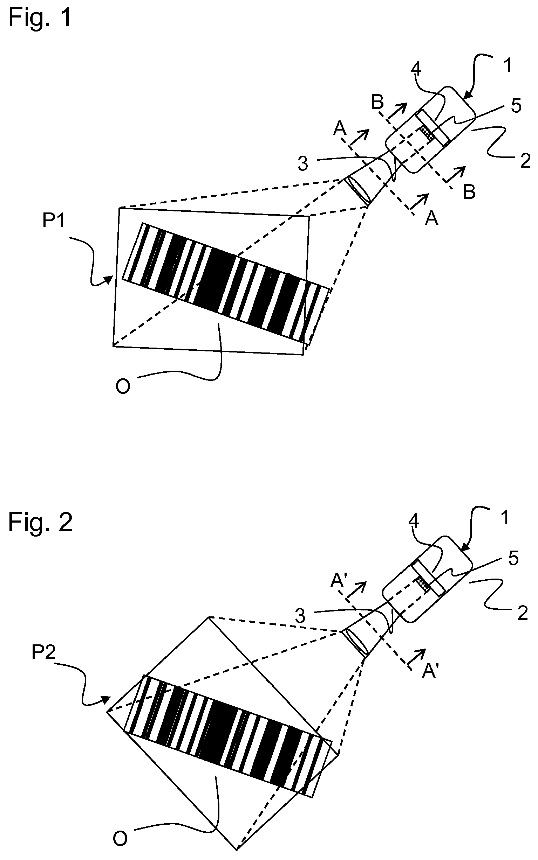

In der Figur 1 ist ein Sensor 1 gezeigt, der zum Erfassen eines Objekts O dient, das insbesondere ein Barcode sein kann. Der Sensor 1 besitzt ein Gehäuse 2, das ein Sichtfenster 3 mit einer definierten Bezugskante 3a zum Objekt O in einer ersten Position P1 und eine hinter dem Sichtfenster 3 angeordnete Informationserfassungseinheit 5 aufweist. Über das Gehäuse 2 ist der Sensor 1 an einer Anlage, wie z. B. ein Förderband, eine Schranke oder dergleichen, derart montiert, dass zumindest eine Bezugskante 3a des Sichtfensters 3 parallel zu einer Ebene der Anlage ausgerichtet ist. Die Objekte O passieren ein Sichtfeld des Sensors 1, das durch die Kanten des Sichtfensters 3 eingegrenzt ist.

In einem Fall, dass das Objekt O gegenüber dem Sichtfenster 3 des Sensors 1 deplatziert ist, so dass es nicht vollständig erfassbar ist, ist erfindungsgemäß die Informationserfassungseinheit 5 in eine zweite Position P2 bringbar, so dass eine Diagonale 7 der Informationserfassungseinheit 5 derart zum Objekt O wie die definierte Bezugskante 3a in der ersten Position P1 positioniert ist.

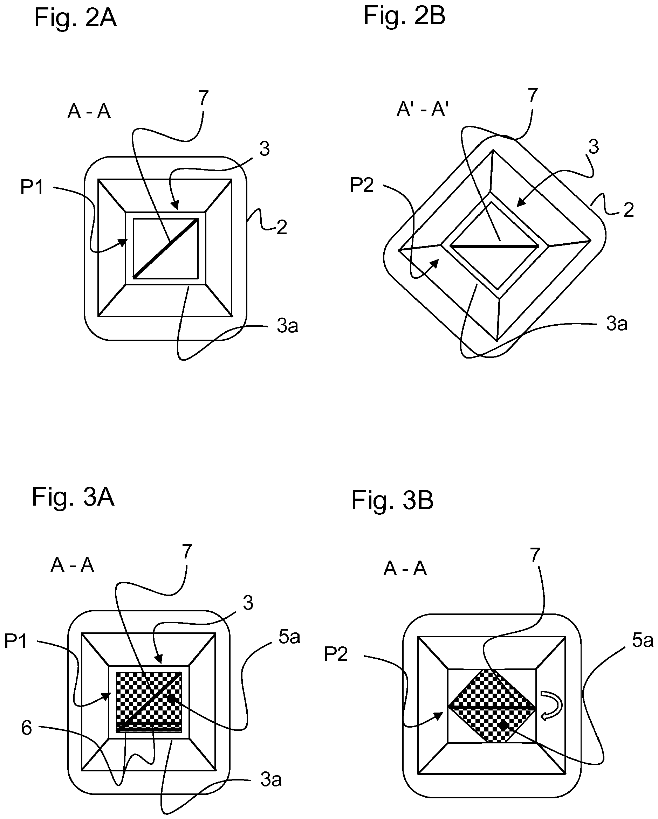

Hierbei ist gemäß einem Ausführungsbeispiel, wie in der Figur 2 gezeigt, der Sensor 1 von der ersten Position P1 in die zweite Position P2 positioniert, so dass der Erfassungswinkel bzw. das Sichtfeld des Sensors 1 in der Ebene des Objektes O gekippt ist.

In der Schnittansicht entlang der Linie A-A bzw. A'-A', wie in Figur 2A und 2B gezeigt, ist schematisch das Sichtfenster 3 gezeigt, wobei hinter dem Sichtfenster 3 die Informationserfassungseinheit 5 gezeigt ist.

Entsprechend der Figur 2A ist der Sensor 1 in der ersten Position P1 positioniert. Um den Erfassungswinkel bzw. das Sichtfeld des Sensors 1 zu vergrößern, ohne den Sensor 1 an sich zu verändern, ist der Sensor 1 wie in Figur 2B in die zweite Position P2 gekippt, so dass die Diagonale 7 der Informationserfassungseinheit 5 wie in der Figur 2B in einer horizontalen Lage positioniert ist.

Zusätzlich zeigen die Figuren 3A und 3B eine Schnittansicht eines weiteren bevorzugten Ausführungsbeispiels, bei dem eine elektronische Karte 4 im Gehäuse 2 vorgesehen ist, auf der die Informationserfassungseinheit 5 in der ersten Position P1 platziert ist, so dass in der ersten Position P1 eine definierte Erfassungsfläche 5a mit einer Vielzahl von Signalerfassungspunkten auf der Informationserfassungseinheit 5 vorgesehen ist. Ferner bilden in der ersten Position P1 die Signalerfassungspunkte eine Vielzahl von parallel zu der Bezugskante 3a des Sichtfensters 3 angeordneten Signalerfassungszeilen 6 und die nicht parallel zu der Bezugskante 3a des Sichtfensters 3 angeordnete Diagonale 7 mit einer maximal möglichen Anzahl an Signalerfassungspunkten der Erfassungsfläche 5a, wobei die Informationserfassungseinheit 5 gegenüber dem Sichtfenster 3 in die zweite Position P2 derart kippbar ist, dass die Diagonale 7 mit der maximal möglichen Anzahl an Signalerfassungspunkten der Erfassungsfläche 5a parallel zu der Bezugskante 3a des Sichtfensters 3 angeordnet ist.

Somit ist anstatt des gesamten Sensors 1 nur die Informationserfassungseinheit 5 gegenüber dem Sichtfenster 3 kippbar, um die Diagonale 7 mit der maximal möglichen Anzahl an Signalerfassungspunkten der Erfassungsfläche 5a der Informationserfassungseinheit 5 von der ersten P1 in die zweite P2 Position zu bringen.

Da die Diagonale 7 mehr Signalerfassungspunkte aufweist als alle anderen parallel zu der Bezugskante 3a des Sichtfensters 3 angeordneten Signalerfassungszeilen 6, wenn die Informationserfassungseinheit 5 in der ersten Position P1 angeordnet ist, ist ein vorgegebener Erfassungsbereich des Sensors durch die parallel angeordneten Signalerfassungszeilen 6 in der ersten Position P1 durch die Erfindung veränderbar, indem die Diagonale 7 der Informationserfassungseinheit 5 in die zweite Position P2 gebracht wird.

Bevorzugter Weise weist die Informationserfassungseinheit 5 einen CCD-, CMOS-, NMOS-, InGaAs-Chip oder andere elektromagnetische Wellen erfassbaren Chips auf. Hierbei haben die Chips unterschiedliche Erfassungsflächen 5a mit unterschiedlicher Anzahl an Signalerfassungspunkten. Die Erfassungsfläche 5a der Informationserfassungseinheit 5 kann eine quadratische Form, eine rechteckige Form mit einem Format von vier zu drei (4:3) oder sechszehn zu neun (16:9) oder eine vieleckige oder elliptische Form dergleichen aufweisen.

Gemäß dem Ausführungsbeispiel in den Figuren 3A und 3B ist die Informationserfassungseinheit 5 mit seiner Erfassungsfläche 5a gegenüber dem Sichtfenster 3 in einer zweiten Position P2 derart kippbar, so dass anstatt der Vielzahl in der ersten Position P1 parallel zu der Bezugskante 3a des Sichtfensters 3 angeordneten Signalerfassungszeilen 6 die in der ersten Position P1 nicht parallel zu der Bezugskante 3a angeordnete Diagonale 7 mit der maximal möglichen Anzahl an Signalerfassungspunkten in der zweiten Position P2 parallel zu der Bezugskante 3a angeordnet ist. Dadurch ist der Erfassungsbereich des Sensors 1 parallel zu der Bezugskante 3a des Sichtfensters 3 vergrößert, ohne das Sichtfenster 3 bzw. den Sensor 1 zu bewegen.

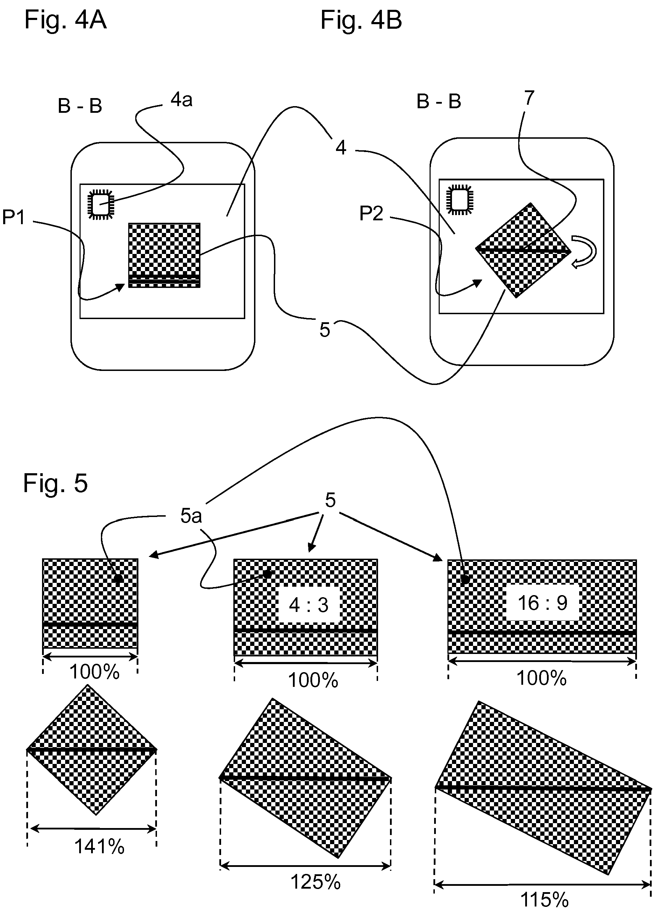

In den Figuren 4A und 4B ist eine schematische Schnittansicht des erfindungsgemäßen Sensors 1 entlang der Linie B-B gezeigt. Die Informationserfassungseinheit 5 ist auf der elektronischen Karte 4 vorgesehen, die eine Auswerteeinheit 4a aufweist.

In der Position P1 ist die Informationserfassungseinheit 5, wie in der Figur 4A gezeigt, derart angeordnet, dass die Kanten der Informationserfassungseinheit 5 parallel zu den Kanten der elektronischen Karte 4 bzw. des Sichtfensters 3 sind.

Gemäß einem bevorzugten Ausführungsbeispiel der Erfindung ist die Auswerteeinheit 4a ausgebildet, das Objekt O im Sichtfeld des Sensors 1 zu erfassen und im Falle, dass der Erfassungsbereich des Sensors 1 nicht ausreicht, um das Objekt O vollständig zu lesen, die Informationserfassungseinheit 5 derart automatisch zu kippen, so dass die Diagonale 7 mit der maximal möglichen Anzahl an Signalerfassungspunkten der Erfassungsfläche 5a von der ersten P1 in die zweite P2 Position angeordnet ist. Dadurch wäre es möglich, das bis dahin unvollständig erfasste Objekt O vollständig auf der Erfassungsfläche 5a zu erfassen.

Bei einem erfindungsgemäßen Sensor 1, wie in der Figur 5 gezeigt, erhöht sich der Erfassungsbereich des Sensors 1 bei einer Informationserfassungseinheit 5 mit einer quadratischen Erfassungsfläche 5a von 100% in der ersten Position P1 um ca. 41% gegenüber dem Sichtfenster 3 in der zweiten Position P2. Bei einer Informationserfassungseinheit 5 mit einer rechteckigen Erfassungsfläche 5a im Verhältnis von 4:3 vergrößert sich der Erfassungsbereich um ca. 25% und bei einer Informationserfassungseinheit 5 mit einer rechteckigen Erfassungsfläche 5a im Verhältnis von 16:9 um ca. 15%. Hierbei ist keine Bewegung des Sensors 1 bzw. des Sichtfensters 3 oder eine gegenüber der Anlage geneigte Montage des Sensors 1 notwendig.

Ferner kann durch die Positionierung der Diagonale 7 mit der maximal möglichen Anzahl an Signalerfassungspunkten parallel oder senkrecht zu der Bezugskante 3a des Sichtfensters 3, der Erfassungsbereich des Sensors 1 sowohl in horizontale als auch vertikale Ausrichtung des Sensors 1 vergrößert werden.

Die Erfindung ist auf Sensoren unterschiedlichster Technologien, wie z. B. 3D-Laserscanner, Mono- oder Stereo-Kamera, Lichtgitter, Radar oder dergleichen, anwendbar, so dass der Erfassungswinkel bzw. das Sichtfeld des Sensors ohne Veränderungen an den Komponenten des Sensors selbst vergrößerbar ist.

**Bezugszeichenliste**

| | | | |
|---|---|---|---|
| 1 | optoelektronischer Sensor | O | Objekt |
| 2 | Gehäuse | P1 | erste Position |
| 3 | Sichtfenster | P2 | zweite Position |
| 3a | Bezugskante | | |
| 4 | elektronische Karte | | |
| 4a | Auswerteeinheit | | |
| 5 | Informationserfassungseinheit | | |
| 5a | Erfassungsfläche | | |
| 6 | Signalerfassungszeilen | | |
| 7 | Diagonale mit maximal möglichen Signalerfassungspunkten | | |

## Patentansprüche

1. Sensor (1) zum Erfassen eines Objektes (O) mit einem Gehäuse (2), das ein Sichtfenster (3) mit einer definierten Bezugskante (3a) zum Objekt (0) in einer ersten Position (P1) und eine hinter dem Sichtfenster (3) angeordnete Informationserfassungseinheit (5) aufweist,
wobei die Informationserfassungseinheit (5) in eine zweite Position (P2) angeordnet oder bringbar ist, **dadurch gekennzeichnet, dass** in der zweiten Position (P2) eine Diagonale (7) der Informationserfassungseinheit (5) derart zum Objekt (O) wie die definierte Bezugskante (3a) in der ersten Position (P1) positioniert ist, wobei eine elektronische Karte (4) im Gehäuse (2) vorgesehen ist, auf der die Informationserfassungseinheit (5) in der ersten Position (P1) platziert ist,
in der ersten Position (P1) eine definierte Erfassungsfläche (5a) mit einer Vielzahl von Signalerfassungspunkten auf der Informationserfassungseinheit (5) vorgesehen ist, und
in der ersten Position (P1) die Signalerfassungspunkte eine Vielzahl von parallel zu der Bezugskante (3a) des Sichtfensters (3) angeordneten Signalerfassungszeilen (6) und die nicht parallel zu der Bezugskante (3a) des Sichtfensters (3) angeordnete Diagonale (7) mit einer maximal möglichen Anzahl an Signalerfassungspunkten der Erfassungsfläche (5a) bilden, und
wobei die Informationserfassungseinheit (5) gegenüber dem Sichtfenster (3) in die zweite Position (P2) derart gekippt ist, dass die Diagonale (7) mit der maximal möglichen Anzahl an Signalerfassungspunkten der Erfassungsfläche (5a) parallel zu der Bezugskante (3a) des Sichtfensters (3) angeordnet ist.

2. Sensor (1) nach Anspruch 1, wobei die Informationserfassungseinheit (5) einen CCD-, CMOS-, NMOS-, InGaAs-Chip oder andere elektromagnetische Wellen erfassbare Chips aufweist.

3. Sensor (1) nach Anspruch 1 oder 2, wobei die Erfassungsfläche (5a) der Informationserfassungseinheit (5) eine quadratische Form oder eine rechteckige Form mit einem Format von vier zu drei (4:3) oder sechszehn zu neun (16:9) oder eine vieleckige oder elliptische Form aufweist.

4. Sensor (1) nach einem der vorhergehenden Ansprüche, wobei die Informationserfassungseinheit (5) um 45° oder weniger zu dem Sichtfenster (3) kippbar ist.

5. Sensor (1) nach einem der vorhergehenden Ansprüche, wobei die elektronische Karte (4) eine Auswerteeinheit (4a) aufweist und die Informationserfassungseinheit (5) automatisch von der ersten (P1) in die zweite (P2) Position gekippt ist, wenn die Auswerteeinheit (4a) erkennt, dass das Objekt (O), insbesondere ein Barcode, durch die Erfassungsfläche (5a) in der ersten Position (P1) nur teilweise erfassbar und somit nicht lesbar ist.

6. Sensor (1) nach Anspruch 1, wobei eine elektronische Karte (4) im Gehäuse (2) vorgesehen ist, auf der die Informationserfassungseinheit (5) in der zweiten Position (P2) platziert ist, so dass die Diagonale (7) der Informationserfassungseinheit (5) parallel zu der Bezugskante (3a) des Sichtfensters (3) angeordnet ist.

## Claims

1. A sensor (1) for detecting an object (O) having a housing (2) which has an inspection window (3) having a defined reference edge (3a) with respect to the object (O) in a first position (P1) and which has an information acquisition unit (5) arranged behind the inspection window (3),
wherein the information acquisition unit (5) is arranged in or can be brought into a second position (P2), **characterised in that**, in the second position (P2), a diagonal (7) of the information acquisition unit (5) is positioned in such a manner with respect to the object (O) as the defined reference edge (3a) is positioned in the first position (P1), wherein an electronic card (4) is provided in the housing (2) and the information acquisition unit (5) is placed thereon in the first position (P1),
in the first position (P1), a defined detection surface (5a) is provided which has a plurality of signal detection points on the information acquisition unit (5), and
in the first position (P1), the signal detection points form a plurality of signal detection rows (6) which are arranged in parallel with the reference edge (3a) of the inspection window (3), with the diagonal (7) not being arranged in parallel with the reference edge (3a) of the inspection window (3) having a maximum possible number of signal detection points of the detection surface (5a), and
wherein the information acquisition unit (5) can be tilted into the second position (P2) with respect to the inspection window (3) such that the diagonal (7) having the maximum possible number of signal detection points of the detection surface (5a) is arranged in parallel with the reference edge (3a) of the inspection window (3).

2. A sensor (1) in accordance with claim 1, wherein the information acquisition unit (5) has a CCD chip, CMOS chip, NMOS chip, InGaAs chip or other chips acquiring electromagnetic waves.

3. A sensor (1) in accordance with claim 1 or claim 2, wherein the detection surface (5a) of the information acquisition unit (5) has a quadratic shape or a rectangular shape having a format of four to three (4:3) or sixteen to nine (16:9) or has a polygonal or elliptical shape.

4. A sensor (1) in accordance with any one of the preceding claims, wherein the information acquisition unit (5) can be tilted by 45° or less with respect to the inspection window (3).

5. A sensor (1) in accordance with any one of the preceding claims, wherein the electronic card (4) has an evaluation unit (4a) and the information acquisition unit (5) is automatically tilted from the first position (P1) into the second position (P2) when the evaluation unit (4a) recognises that the object (O), in particular a bar code, can only be partly detected by the detection surface (5a) in the first position (P1) and is thus not readable.

6. A sensor (1) in accordance with claim 1, wherein an electronic card (4) is provided in the housing (2) and the information acquisition unit (5) is placed thereon in the second position (P2) such that the diagonal (7) of the information acquisition unit (5) is arranged in parallel with the reference edge (3a) of the inspection window (3).

## Revendications

1. Capteur (1) pour la détection d'un objet (O), comprenant un boîtier (2) qui comporte une fenêtre de vision (3) avec une arête de référence définie (3a) vis-à-vis de l'objet (O) dans une première position (P1) et une unité de détection d'information (5) agencée derrière la fenêtre de vision (3),
dans lequel l'unité de détection d'information (5) est agencée, ou peut être amenée, dans une seconde position (P2),
**caractérisé en ce que** dans la seconde position (P2), une diagonale (7) de l'unité de détection d'information (5) est positionnée par rapport à l'objet (O) de la même manière que l'arête de référence définie (3a) dans la première position (P1), dans lequel il est prévu une carte électronique (4) dans le boîtier (2), sur laquelle l'unité de détection d'information (5) est placée dans la première position (P1),
dans la première position (P1) une surface de détection définie (5a) avec une pluralité de points de détection de signaux est prévue sur l'unité de détection d'information (5), et
dans la première position (P1) les points de détection de signaux forment une pluralité de cellules de détection de signaux (6) agencées parallèlement à l'arête de référence (3a) de la fenêtre de vision (3), et la diagonale (7) agencée de manière non parallèle à l'arête de référence (3a) de la fenêtre de vision (3) avec un nombre maximum possible de points de détection de signaux de la surface de détection (5a), et
dans lequel l'unité de détection d'information (5) est basculée par rapport à la fenêtre de vision (3) jusque dans la seconde position (P2) de telle façon que la diagonale (7) avec le nombre maximum possible de points de détection de signaux de la surface de détection (5a) est agencée parallèlement à l'arête de référence (3a) de la fenêtre de vision (3).

2. Capteur (1) selon la revendication 1, dans lequel l'unité de détection d'information (5) comprend un chip à CCD, à CMOS, à NMOS, à InGaAs, où d'autres chips qui détectent des ondes électromagnétiques.

3. Capteur (1) selon la revendication 1 ou 2, dans lequel la surface de détection (5a) de l'unité de détection d'information (5) présente une forme quadratique ou une forme rectangulaire avec un format de quatre-sur-trois (4 : 3) ou de seize-sur-neuf (16 : 9), ou une forme polygonale ou elliptique.

4. Capteur (1) selon l'une des revendications précédentes, dans lequel l'unité de détection d'information (5) est susceptible d'être basculée de 45° ou moins par rapport à la fenêtre de vision (3).

5. Capteur (1) selon l'une des revendications précédentes, dans lequel la carte électronique (4) comprend une unité d'évaluation (4a), et l'unité de détection d'information (5) est basculée automatiquement de la première position (Pa) jusque dans la seconde position (P2) quand l'unité d'évaluation (4a) reconnaît que l'objet (O), en particulier un code à barres, ne peut être que partiellement détecté par la surface de détection (5a) dans la première position (P1), et n'est par conséquent pas lisible.

6. Capteur (1) selon la revendication 1, dans lequel il est prévu une carte électronique (4) dans le boîtier (2), sur laquelle l'unité de détection d'information (5) est placée dans la seconde position (P2), de sorte que la diagonale (7) de l'unité de détection d'information (5) est agencée parallèlement à l'arête de référence (3a) de la fenêtre de vision (3).
